# FASCICULE DE BREVET EUROPEEN

(11) **EP 2 564 452 B1**
(45) Date de publication et mention de la délivrance du brevet: **11.06.2014**
(21) Numéro de dépôt: 11715699.2
(22) Date de dépôt: 18.04.2011
(51) Int. Cl.: H01M 2/10, H01M 2/20, H01M 10/02, H01M 10/48

(54) **ENSEMBLE ACCUMULATEUR POUR BATTERIE DE VEHICULE ELECTRIQUE OU HYBRIDE MUNI D'UNE ENTRETOISE DE CONNEXION**
AKKUMULATORANORDNUNG FÜR EINE BATTERIE EINES ELEKTRO- ODER HYBRIDFAHRZEUGES MIT EINER VERBINDUNGSSTREBE
ACCUMULATOR ASSEMBLY FOR A BATTERY OF AN ELECTRIC OR HYBRID VEHICLE, PROVIDED WITH A CONNECTING STRUT

(30) Priorité: 28.04.2010 FR 1053287
(43) Date de publication de la demande: 06.03.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: JOYE, Olivier, F-63040 Clermont-Ferrand Cedex 9 (FR); AUGUET, Thierry, F-63040 Clermont-Ferrand Cedex 9 (FR)
(74) Mandataire: Bauvir, Jacques
(86) Numéro de dépôt international: PCT/EP2011/056156
(87) Numéro de publication internationale: WO 2011/134829

(56) Documents cités:
- US-A1- 2006 286 452

## Description

La présente invention concerne le domaine des ensembles accumulateurs pour batterie de véhicule électrique ou hybride, notamment de véhicule automobile.

Par « véhicule électrique automobile », on entend un véhicule tel que défini dans le règlement N° 100 des Nations Unies concernant l'homologation des véhicules électriques à batterie.

La présente invention concerne plus particulièrement un ensemble accumulateur comprenant une pluralité d'éléments accumulateurs d'énergie électrique superposés et au moins une entretoise de connexion pour relier électriquement les éléments accumulateurs. Une batterie est formée d'un ou plusieurs ensembles accumulateurs et constitue la source d'énergie électrique utilisée pour la motorisation du véhicule électrique ou hybride.

La demande de brevet WO 2005/036679 décrit un ensemble accumulateur formé d'un empilement de boîtiers de réception contenant des éléments accumulateurs d'énergie. Chaque boîtier comporte des plateaux superposés entre lesquels sont alignés les éléments accumulateurs selon une direction perpendiculaire à l'axe d'empilement des boîtiers. Des plaques conductrices permettent de réaliser la connexion électrique des électrodes positive et négative des éléments accumulateurs adjacents. Une carte de circuit imprimé est également disposée entre les plateaux afin de déterminer la tension et la température des éléments accumulateurs. La carte de circuit imprimé comporte à cet effet une pluralité de fils électriques pour être reliée à chaque électrode de connexion des éléments accumulateurs.

Ces fils électriques sont fixés sur les électrodes de connexion qui sont peu épaisses et fragiles. En outre, une telle fixation est généralement réalisée par soudage. Ces opérations sont relativement délicates à mettre en oeuvre, longues et onéreuses.

Par ailleurs, étant donné la disposition relative des éléments accumulateurs d'énergie, l'encombrement global de l'ensemble est relativement important.

On connaît également, par la demande de brevet US 2006/0286452, un ensemble accumulateur comprenant une pluralité d'éléments accumulateurs d'énergie électrique superposés et dans lequel un contrôle de la tension de chaque élément accumulateur est réalisé.

On connaît encore, par la demande de brevet WO 2007/046587, un ensemble accumulateur formé d'un empilement de boîtiers de réception contenant chacun deux éléments accumulateurs d'énergie empilés l'un contre l'autre. Les boîtiers sont rapportés sur une platine de support commune comportant une pluralité de barres omnibus associées chacune à un des boîtiers. Chaque barre omnibus comporte un corps de connexion électrique monté en appui contre les extrémités libres des électrodes des éléments accumulateurs associés, deux pattes de fixation de la barre sur la platine de support, et une extension prolongeant une des pattes et apte à être reliée électriquement et mécaniquement à une carte de circuit imprimé. La carte de circuit imprimé permet de déterminer la tension des éléments accumulateurs connectés à la barre omnibus associée.

Dans ce document, la fixation des électrodes de connexion des éléments accumulateurs et de la barre omnibus correspondante est réalisée par soudage. Par ailleurs, pour la mise en contact des éléments accumulateurs et des barres omnibus, il est nécessaire de prévoir la platine de support.

Pour l'assemblage de l'ensemble accumulateur, il faut donc réaliser des opérations de soudage et de multiples opérations de montage.

La présente invention a pour but de remédier aux inconvénients précités.

Plus particulièrement, la présente invention vise à prévoir un ensemble accumulateur facile à fabriquer, à monter, à assembler et présentant un encombrement global réduit.

La présente invention vise également à prévoir un ensemble accumulateur présentant une bonne sûreté de fonctionnement.

Dans un mode de réalisation, l'ensemble accumulateur comprend une pluralité d'éléments accumulateurs d'énergie électrique superposés selon un axe d'empilage et comprenant chacun des électrodes de connexion, au moins une entretoise électriquement conductrice disposée axialement entre les électrodes de connexion de deux éléments accumulateurs adjacents et reliée électriquement à au moins un desdits éléments, et au moins une fiche de connexion montée à l'intérieur d'un évidement de l'entretoise conductrice et reliée à un câble électrique pour une mesure de tension.

La disposition de la ou des entretoises électriquement conductrices axialement entre les électrodes des éléments accumulateurs permet de réaliser la connexion électrique de ces éléments avec un nombre réduit de pièces à assembler, ce qui favorise la compacité de l'ensemble accumulateur.

En outre, l'évidement ou perçage prévu sur la ou les entretoises électriquement conductrices et adapté pour recevoir la fiche de connexion associée permet de réaliser un branchement électrique de façon particulièrement simple et rapide sans qu'il soit notamment nécessaire de réaliser des soudures de connexion.

Avantageusement, l'ensemble comprend un moyen de protection contre un court-circuit relié électriquement à la fiche de connexion. Le moyen de protection peut être monté sur le câble électrique associé. De préférence, le moyen de protection comprend un fusible ou plus généralement un coupe-circuit.

L'extrémité du câble électrique associé à la ou aux entretoises électriques est fixé sur un connecteur sur lequel peut venir se monter directement une carte de circuit imprimé pour réaliser des mesures de tension.

Si le courant électrique traversant le câble électrique est supérieur à un seuil prédéterminé, le moyen de protection évite un éventuel court-circuit au sein de l'ensemble accumulateur pouvant provoquer un début d'incendie.

Par ailleurs, dans certaines conditions de roulage du véhicule, les vibrations auxquelles est soumis l'ensemble accumulateur peuvent être relativement importantes. Si la liaison mécanique entre le ou les câbles électriques et le connecteur a été mal réalisée, l'extrémité du ou des câbles électriques peut se désolidariser dudit connecteur et venir en appui contre un des éléments accumulateurs ou contre le boîtier de réception à l'intérieur duquel est monté l'ensemble accumulateur. Le moyen de protection permet également dans ce cas d'éviter un court-circuit au sein de l'ensemble accumulateur.

Dans un mode de réalisation, l'entretoise conductrice comprend une base contre laquelle vient en appui au moins une électrode de connexion des deux éléments accumulateurs adjacents, et un talon s'étendant en saillie par rapport à ladite base et sur lequel est ménagé l'évidement. L'évidement peut s'étendre transversalement par rapport à l'axe d'empilage des éléments accumulateurs en étant parallèle à une face avant de la base.

Dans un mode de réalisation, la fiche de connexion est élastiquement déformable, et peut notamment être du type fiche banane.

L'ensemble peut comprendre une pluralité d'entretoises électriquement conductrices disposées axialement entre au moins certaines des électrodes de connexion des éléments accumulateurs, et une pluralité de fiches de connexion montées chacune à l'intérieur de l'évidement de l'entretoise conductrice associée et reliées chacune à un câble électrique propre. Chaque câble électrique comprend avantageusement un moyen de protection contre un court-circuit.

Dans un mode de réalisation, les éléments accumulateurs d'énergie électrique sont montés de manière à disposer alternativement les électrodes positives et négatives de connexion le long de l'axe d'empilage de sorte qu'une électrode positive d'un élément accumulateur soit axialement adjacente d'une électrode négative d'un élément accumulateur adjacent. Des entretoises isolantes et les entretoises conductrices peuvent être agencées pour connecter en série la pluralité d'éléments accumulateurs. Les électrodes de connexion positives et négatives peuvent être disposées alternativement le long de l'axe d'empilage d'un élément accumulateur à un autre élément axialement adjacent.

Alternativement, il est également possible de prévoir un montage en parallèle des éléments accumulateurs en alignant respectivement les électrodes positives et négatives le long de l'axe d'empilage et en montant les entretoises de façon adaptée.

Les entretoises isolantes comportent de préférence une base contre laquelle vient en appui au moins une électrode de deux éléments accumulateurs axialement adjacents, et une extension en contact avec une enveloppe extérieure d'au moins un desdits éléments accumulateurs. Les entretoises isolantes peuvent s'étendre au moins en partie en saillie par rapport aux électrodes de connexion et aux entretoises conductrices du côté opposé aux éléments accumulateurs.

La présente invention sera mieux comprise à la lecture de la description détaillée d'un mode de réalisation pris à titre d'exemple nullement limitatif et illustré par les dessins annexés, sur lesquels :
- la figure 1 est une vue éclatée en perspective d'un ensemble accumulateur selon un exemple de réalisation de l'invention,
- la figure 2 est une vue assemblée en perspective de l'ensemble de la figure 1,
- les figures 3 et 4 sont des vues de détail de l'ensemble dans la position assemblée, et
- la figure 5 est une vue partielle d'un câble électrique de l'ensemble accumulateur des figures 1 à 4.

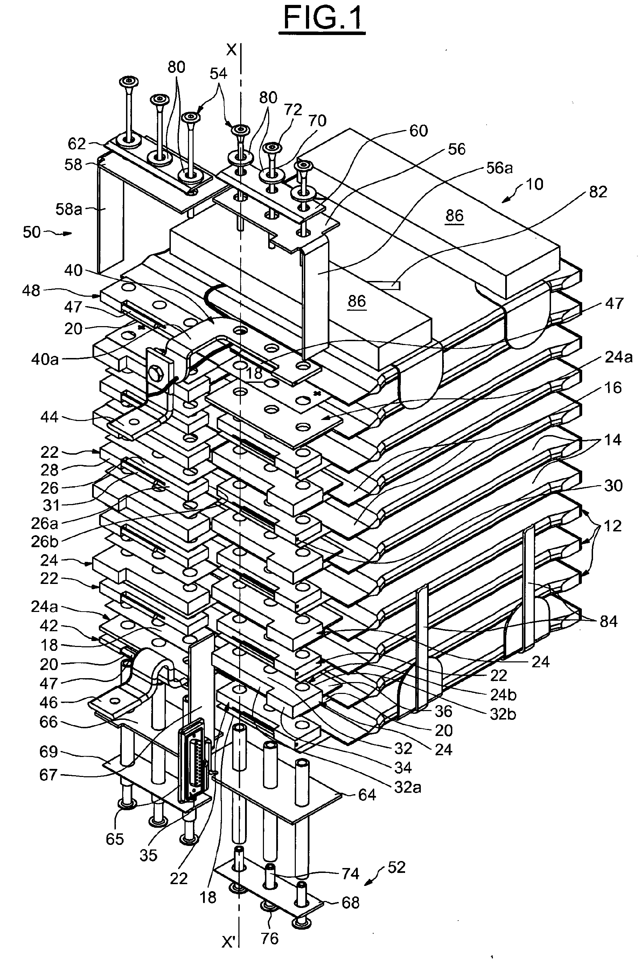

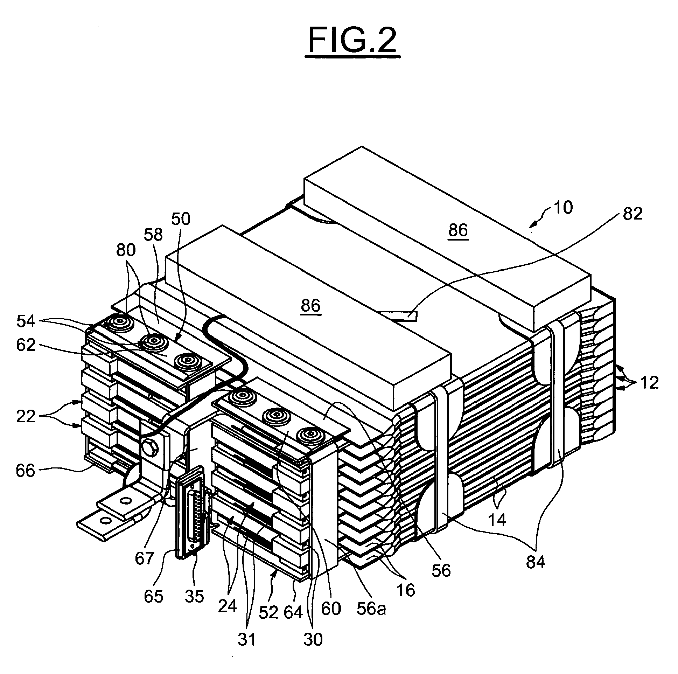

Sur les figures 1 et 2, on a représenté un exemple de réalisation d'un ensemble accumulateur 10 comprenant une pluralité de cellules ou éléments accumulateurs 12 d'énergie électrique superposés le long d'un axe X-X' d'empilage supposé vertical.

Les éléments accumulateurs 12 sont identiques entre eux et se présentent sous forme de plaques rectangulaires. Ils sont empilés axialement les uns relativement aux autres de manière à ce que les faces principales de deux éléments accumulateurs adjacents soient en regard. Dans l'exemple illustré, le nombre d'éléments accumulateurs 12 est égal à onze. Bien entendu, il est possible de prévoir un nombre différent d'éléments accumulateurs en fonction de l'énergie électrique à délivrer.

Chaque élément accumulateur 12 comporte une enveloppe 14 d'encapsulation extérieure à l'intérieur de laquelle sont disposées une cathode et une anode séparées par un électrolyte (non représentés). L'électrolyte peut être par exemple un électrolyte aprotique dans le cas d'un élément accumulateur du type lithium-ion ou encore un séparateur polymère à membrane dans le cas d'un élément accumulateur du type lithium-ion polymère.

L'enveloppe 14 d'encapsulation comporte une zone de fermeture 16 scellée d'épaisseur réduite comprenant un bord libre à partir duquel s'étendent transversalement par rapport à l'axe X-X' des électrodes 18 positive et 20 négative de connexion. Les électrodes 18, 20 de connexion sont espacées transversalement l'une par rapport à l'autre. Elles se présentent sous la forme de languettes et sont réalisées à partir de fines feuilles métalliques présentant une épaisseur inférieure à celles de la zone de fermeture 16.

Dans l'exemple de réalisation illustré, les éléments accumulateurs 12 d'énergie électrique sont agencés de manière à disposer alternativement les électrodes 18 positives et 20 négatives, en considérant l'axe X-X' d'empilage, de sorte que l'électrode positive, respectivement négative, d'un élément accumulateur soit axialement en regard et adjacent de l'électrode négative, respectivement positive, de l'élément accumulateur immédiatement adjacent situé au-dessous et/ou au-dessus.

Afin de relier électriquement les différents éléments accumulateurs 12, l'ensemble 10 comprend des entretoises 22 conductrices et des entretoises 24 isolantes disposées axialement entre les électrodes 18, 20 de connexion alignées axialement. Les entretoises 22 sont formées dans un matériau électriquement conducteur, par exemple en matière métallique telle que l'aluminium ou toute autre matière appropriée. Les entretoises 22 sont formées dans un matériau isolant, par exemple en matière synthétique ou toute autre matière appropriée.

Dans l'exemple de réalisation illustré, entre deux éléments accumulateurs 12 axialement adjacents sont disposées une entretoise 22 conductrice et une entretoise 24 isolante, à l'exception de l'élément accumulateur supérieur de l'empilement et de l'élément accumulateur inférieur adjacent. En effet, entre ces deux éléments, il est prévu seulement une entretoise isolante entre l'électrode 18 positive de l'élément accumulateur 12 supérieur et l'électrode 20 négative de l'élément inférieur adjacent, les deux autres électrodes 20, 18 de ces deux éléments étant directement en contact l'une contre l'autre.

Les entretoises 22 conductrices sont montées axialement entre l'électrode 18 positive d'un élément accumulateur et l'électrode 20 négative de l'élément accumulateur adjacent supérieur. Les entretoises isolantes 24 sont montées axialement entre l'électrode 20 négative d'un élément accumulateur et l'électrode 18 positive de l'élément accumulateur adjacent supérieur. Les entretoises 22 conductrices et 24 isolantes sont disposées alternativement le long de l'axe X-X'.

En considérant deux éléments accumulateurs 12 adjacents, l'entretoise conductrice 22 est montée en appui contre la face supérieure de l'électrode 18 positive de l'élément accumulateur inférieur et s'étend axialement jusqu'à venir en contact de la face inférieure de l'électrode 20 négative de l'élément accumulateur supérieur. Inversement, l'entretoise 24 isolante est disposée entre la face supérieure de l'électrode 20 négative de l'élément accumulateur inférieur et la face inférieure de l'électrode 18 positive de l'élément accumulateur supérieur en venant axialement en contact contre lesdites faces.

Dans l'exemple de réalisation illustré, les électrodes 18, 20 de connexion et les entretoises 22 conductrices et 24 isolantes sont disposées de manière à monter en série la pluralité d'éléments accumulateurs 12. En variante, il pourrait être possible de prévoir un montage en parallèle des éléments accumulateurs. Dans ce but, il conviendrait d'aligner respectivement les électrodes positives et négatives le long de l'axe d'empilage et de disposer les entretoises de façon appropriée.

Les entretoises 22 conductrices sont identiques entre elles et comportent chacune une base 26 se présentant sous forme de plaque rectangulaire et permettant de relier électriquement les électrodes 18, 20 de deux éléments accumulateurs 12 superposés axialement. Dans ce but, les surfaces inférieure et supérieure de la base 26 sont en contact respectivement contre les électrodes 18 positive et 20 négative de ces éléments accumulateurs 12. Une face avant 26a de la base 26, située du côté opposé aux éléments accumulateurs 12, est prolongée en partie par un talon 28. La base 26 et le talon 28 sont dimensionnés de manière à recouvrir la majeure partie des faces des électrodes 18, 20 associées en restant en retrait ou en affleurant avec les bords périphériques desdites électrodes. Une face arrière 26b de la base 26 reste à distance de la zone de fermeture 16 des éléments accumulateurs 12 associés.

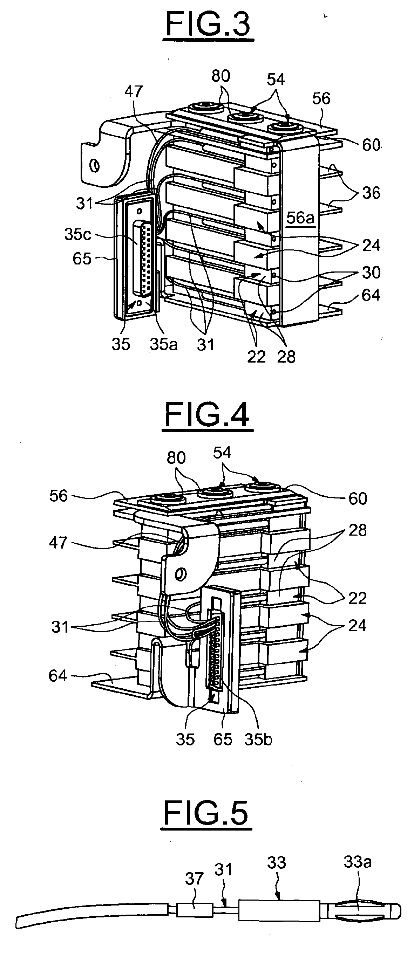

Chaque entretoise 22 comporte un logement ou évidement 30 traversant ménagé dans le talon 28 et s'étendant transversalement à l'axe X-X' en étant parallèle à la face avant 26a de la base 26. L'évidement 30 de chaque entretoise 22 conductrice permet le montage d'une fiche de connexion 33 (figure 5) montée à une extrémité d'un câble électrique 31. A chaque entretoise 22 est donc associé un câble électrique 31 comportant une fiche de connexion 33.

La fiche de connexion 33 de chaque câble électrique 31 forme une fiche mâle apte à être montée à l'intérieur de l'évidement 30 associé formant prise femelle. Plus précisément, la fiche de connexion 33 comporte une partie terminale 33a conductrice venant se loger dans l'évidement 30 pour connecter électriquement le câble 31 et l'entretoise 22 conductrice associée. La partie terminale 33a est avantageusement élastiquement déformable et peut être fixée sur l'entretoise 22 par coincement à l'intérieur de l'évidement 30. La fixation de la fiche de connexion 33 sur l'entretoise 22 peut bien entendu être réalisée par tout autre moyen approprié, par exemple par sertissage, vissage, etc. La fiche de connexion 33 peut avantageusement être du type fiche banane.

Chaque câble électrique 31 comporte également un fusible 37 électrique de protection relié à la fiche de connexion. Dans l'exemple de réalisation illustré, le fusible 37 est monté sur le câble électrique 31 de manière à être situé au voisinage immédiat de la fiche de connexion 33. Le fusible 37 comprend une partie conductrice prévue pour fondre lorsque le courant passant à travers le câble électrique 31 est supérieur à un seuil prédéterminé. Le fusible peut par exemple être du type ultra-rapide FF selon la norme internationale CEI 60127.

Comme illustré aux figures 3 et 4, à l'opposé de l'extrémité reliée à la fiche de connexion connectée à l'entretoise 22 associée, chaque câble électrique 31 est fixé à un connecteur 35 commun. Le connecteur 35 comprend un corps 35a de fixation, une première zone de connexion 35b mâle comportant des broches de contact pour fixer les câbles électriques 31, et une seconde zone de connexion 35c femelle opposée sur laquelle peut avantageusement être branchée directement une carte de circuit imprimé (non représentée) pour réaliser des mesures de tension. Les zones de connexion 35b, 35c s'étendent de part et d'autre du corps 35a et sont connectées électriquement. Le connecteur 35 peut par exemple être un connecteur SUB-D.

En se référant de nouveau aux figures 1 et 2, les entretoises 24 comportent des premier et second sous-groupes d'entretoises 24a, 24b isolantes. Les entretoises 24a isolantes sont identiques et se présentent sous forme de plaques rectangulaires d'épaisseur mince. Elles sont au nombre de deux. La surface inférieure de l'une de ces entretoises 24a est montée indirectement contre la face supérieure de l'électrode 20 négative de l'élément accumulateur 12 inférieur de l'empilement, comme cela sera décrit par la suite. La surface supérieure de cette entretoise est montée en contact contre la face inférieure de l'électrode 18 positive de l'élément accumulateur situé axialement au-dessus. L'entretoise 24 permet de réaliser une isolation électrique de ces deux électrodes. L'autre entretoise 24a vient en appui contre la face inférieure de l'électrode 18 positive de l'élément accumulateur 12 supérieur de l'empilement et la face supérieure de l'électrode 20 négative de l'élément accumulateur 12 situé axialement au-dessous.

Les entretoises 24b sont montées axialement entre l'électrode 20 négative d'un élément accumulateur et l'électrode 18 positive de l'élément accumulateur adjacent supérieur pour les éléments accumulateurs 12 disposés axialement entre les éléments accumulateurs inférieur et supérieur de l'empilement.

Les entretoises 24b sont identiques entre elles et comportent chacune une base 32 se présentant sous forme de plaque rectangulaire permettant d'isoler électriquement les électrodes 20, 18 des éléments accumulateurs 12 superposés axialement. La base 32 est dimensionnée de manière à recouvrir la majeure partie des faces des électrodes 20 et 18, une face avant 32a de ladite base affleurant sensiblement axialement avec le bord libre avant des électrodes. La face avant 32a de la base 32 est prolongée en partie par un talon 34 s'étendant en saillie par rapport au bord libre avant des électrodes, et plus généralement au-delà des entretoises 22 conductrices. Les talons 34 sont alignés axialement avec les talons 28 des entretoises 22 conductrices. Les talons 34 permettent de s'assurer de l'isolation électrique de l'ensemble 10 accumulateur par rapport à un boîtier de réception (non représenté) de l'ensemble accumulateur.

Chaque entretoise 24b comporte une extension 36 de faible épaisseur s'étendant à partir de la face arrière 32b de la base et prévue pour venir en appui contre l'une des zones de fermeture 16 des éléments accumulateurs associés à l'entretoise. Cette extension 36 permet d'éviter un contact entre les électrodes 20 négative et 18 positive à isoler de deux éléments accumulateurs adjacents, lors d'une éventuelle déformation de l'une ou de ces deux électrodes. En effet, les électrodes 18, 20 étant réalisées sous forme de fines feuilles métalliques, elles peuvent se plier légèrement et venir au contact de l'électrode axialement adjacente, ce qui peut créer un court-circuit. On accroît ainsi la sûreté de fonctionnement de l'ensemble 10 accumulateur.

La disposition du premier sous-groupe d'entretoises 24a relativement aux électrodes 18, 20 et aux enveloppes 14 des éléments accumulateurs 12 associés est similaire à celle qui vient d'être décrite pour le second sous-groupe d'entretoises 24b.

Afin de pouvoir connecter électriquement l'ensemble 10 à un consommateur d'énergie électrique, qui peut avantageusement être la motorisation électrique du véhicule, des attaches 40 supérieure et 42 inférieure sont prévues respectivement pour la fixation de câbles 44, 46 de puissance. L'attache 40 supérieure est montée en appui contre la face supérieure de l'électrode 18 positive de l'élément accumulateur supérieur de l'empilement. L'attache 42 inférieure est montée en contact de la face supérieure de l'électrode 20 négative de l'élément accumulateur inférieur dudit empilement et l'entretoise 24a correspondante. L'entretoise 24a est ainsi montée indirectement en contact contre ladite électrode 20 négative. Les attaches 40, 42 sont réalisées dans un matériau électriquement conducteur.

L'attache 42 inférieure présente une structure identique à celle des entretoises 22 conductrices en présentant toutefois une épaisseur réduite. Une extrémité du câble 46 de puissance est serrée axialement entre l'attache 42 et l'entretoise 24a correspondante. L'attache 40 supérieure présente également une structure proche des entretoises 22 et comporte en outre une extension 40a pour permettre la fixation du câble 44 de puissance.

De façon similaire aux entretoises 22 conductrices, les attaches 40, 42 comportent des évidements prévus pour le montage d'une fiche de connexion d'un câble électrique 47 qui est identique aux câbles 31. Du côté opposé à la fiche de connexion, les câbles électriques 47 sont fixés au connecteur 35 au niveau de la zone de connexion 35b. Ils permettent de réaliser une mesure de la tension totale aux bornes de l'ensemble 10 accumulateur. Cette mesure s'effectue entre l'électrode positive 18 de l'élément accumulateur supérieur et l'électrode négative 20 de l'élément accumulateur inférieur de l'empilement.

L'ensemble 10 comprend encore une plaque 48 de structure identique à celle des entretoises 22 conductrices et montée axialement en appui sur la face supérieure de l'électrode 20 négative de l'élément accumulateur 12 supérieur de l'empilement. Cette plaque 48 comporte un évidement prévu pour le montage d'une fiche de connexion d'un câble électrique 47. Du côté opposé à la fiche de connexion, le câble 47 est fixé au connecteur 35 afin de pouvoir réaliser une mesure de tension.

Pour assurer la fixation des électrodes 18, 20 des éléments accumulateurs relativement aux entretoises 22 conductrices et 24 isolantes, l'ensemble 10 comprend des flasques d'extrémité 50 supérieur, 52 inférieur et des tirants 54 d'assemblage coopérant avec les flasques d'extrémité pour enserrer axialement les entretoises et électrodes de connexion.

Le flasque d'extrémité 50 supérieur comporte une première plaque d'appui 56 montée axialement en contact contre la surface supérieure de l'attache 40 et prolongée perpendiculairement au niveau d'un bord latéral par une patte 56a s'étendant axialement vers le bas. La patte 56a présente une dimension axiale telle que, dans la position assemblée des éléments accumulateurs 12, son extrémité inférieure est située axialement au-dessous de l'électrode 18 positive de l'élément accumulateur inférieur de l'empilement, sensiblement au niveau du flasque d'extrémité 52 inférieur. La patte 56a s'étend au voisinage des électrodes 18, 20 et entretoises 22, 24 empilées axialement du côté extérieur de l'empilement, i.e. du côté opposé à l'autre empilage d'électrodes et d'entretoises. La patte 56a forme une protection ou barrière permettant de s'assurer de l'isolation électrique de l'ensemble 10 par rapport à son boîtier de réception.

Le flasque d'extrémité 50 comporte également une seconde plaque d'appui 58 venant axialement en contact contre la surface supérieure de la plaque 48, et des contre-plaques 60, 62 venant respectivement axialement en contact contre les surfaces supérieures des plaques d'appui 56, 58. Un bord latéral de la plaque d'appui 58 est prolongé par une patte 58a axiale symétrique à la patte 56a en considérant un plan médian axial des éléments accumulateurs 12. La patte 58a s'étend axialement vers le bas et son extrémité inférieure est située axialement au niveau du flasque d'extrémité 52 inférieur dans la position assemblée des éléments accumulateurs 12. Les plaques d'appui 56, 58 sont réalisées dans un matériau isolant.

Le flasque d'extrémité 52 inférieur comporte des première et seconde plaques d'appui 64, 66 venant respectivement en contact contre les faces inférieures des électrodes positive 18 et négative 20 de l'élément accumulateur 12 inférieur de l'empilement. La plaque d'appui 64 comporte une patte 65 de support élastique prévue pour la fixation du connecteur 35 sur lequel sont fixées les extrémités des câbles électriques 31, 47. La patte 65 comporte un évidement traversant pour permettre le montage du corps 35a de fixation du connecteur, les zones de connexion 35b et 35c s'étendant de part et d'autre de ladite patte. Un bord latéral de la plaque d'appui 66 est prolongé par une patte 67 axiale s'étendant vers le haut à travers l'espace transversal situé entre les deux empilages axiaux d'électrodes 18, 20 de connexion et des entretoises 22, 24. L'extrémité supérieure de la patte 67 axiale est située axialement au niveau de la plaque d'appui 58 du flasque d'extrémité 50 supérieur dans la position assemblée des éléments accumulateurs 12.

Le flasque d'extrémité 52 comporte également des contre-plaques 68, 69 venant respectivement en appui contre les surfaces inférieures des plaques d'appui 64, 66.

Les tirants 54 d'assemblage traversent axialement l'empilement d'électrodes 18, 20 et d'entretoises 22, 24 pour les enserrer axialement entre les flasques d'extrémité 50, 52. Pour permettre le montage des tirants 54 d'assemblage, les électrodes 18 et 20 de connexion, les entretoises 22 et 24, les attaches 40 et 42, la plaque 48, les plaques d'appui 56, 58, 64, 66 et les contre-plaques 60, 62, 68, 69 comportent des évidements traversants alignés axialement. Dans l'exemple de réalisation illustré, trois évidements sont prévus sur chacun de ces organes.

Les tirants 54 d'assemblage sont identiques entre eux et au nombre de six. Chaque tirant 54 comporte une partie mâle comportant une tige 70 filetée, s'étendant axialement et munie, à son extrémité supérieure, d'une tête 72 de serrage comportant un trou taraudé de manière à permettre l'insertion d'une clé en vue du vissage. Chaque tirant 54 comporte également une partie femelle comprenant une portion de montage 74 cylindrique munie intérieurement d'un filetage correspondant à celui de la tige 70. L'extrémité inférieure de la partie de montage 74 comporte une tête 76 d'appui venant en contact contre la contre-plaque 68, 69 correspondante du flasque d'extrémité 52 inférieur. Le vissage des tiges 70 filetées dans les portions de montage 74 permet aux flasques d'extrémité 50, 52 d'enserrer axialement les entretoises 22, 24 isolantes et les électrodes 18, 20 et d'obtenir un contact axial entre elles afin de réaliser la connexion électrique des éléments accumulateurs 12 empilés.

Des manchons 78 d'isolation sont prévus pour le montage des tiges 70 filetées et des portions de montage 74 à l'intérieur des évidements pratiqués sur les électrodes 18 et 20 de connexion, les entretoises 22 et 24, la plaque 48, les attaches 40 et 42, les plaques d'appui 56, 58, 64, 66 et les contre-plaques associées. Les manchons 78 d'isolation sont interposés entre les tirants 54 d'assemblage et ces évidements afin d'isoler électriquement les tirants. Dans ce but, les manchons 78 sont réalisés dans un matériau électriquement isolant, par exemple en silicone.

Afin de s'assurer du maintien du contact axial entre les électrodes 18, 20 des éléments accumulateurs et les entretoises 22 et 24, l'ensemble 10 comporte des moyens de précontrainte 80 disposés chacun autour d'une des tiges 70 des tirants 54 d'assemblage et montés axialement en contact de la tête 72 de serrage associée et de la contre-plaque 60, 62 correspondante du flasque d'extrémité 50. Les moyens de précontrainte 80 sont identiques entre eux et se présentent chacun sous la forme d'une rondelle annulaire à section rectangulaire à l'état libre. Les rondelles peuvent par exemple être des rondelles du type Belleville ou à plateau. Alternativement, il est possible d'utiliser tout autre moyen de précontrainte élastique à élasticité axiale apte à exercer un effort de précontrainte axiale.

Après serrage des tirants 54 d'assemblage, les moyens de précontrainte 80 sont aptes à exercer des efforts axiaux sur le flasque d'extrémité 50 supérieur de manière à appliquer une précontrainte axiale sur les électrodes 18, 20 des éléments accumulateurs et les entretoises 22, 24. On assure ainsi un jeu axial nul entre les deux empilages axiaux d'électrodes 18, 20 et d'entretoises de connexion garantissant une bonne connexion électrique des différents éléments accumulateurs 12. En outre, les moyens de précontrainte 80 permettent d'appliquer, entre les électrodes 18, 20 et les entretoises 22, 24, une pression de contact globalement uniforme au cours du temps.

L'ensemble 10 comprend encore avantageusement des sondes de mesure de la température des éléments accumulateurs 12. Une première sonde 82 est fixée sur la face supérieure de l'élément accumulateur supérieur de l'empilement, une seconde sonde pouvant être fixée sur un élément accumulateur situé par exemple à mi-hauteur de l'empilement. La fixation des sondes de mesure peut être réalisée par collage. Les sondes sont reliées au connecteur 35 par des câbles (non représentés) de façon à pouvoir réaliser un contrôle de la température de l'ensemble 10.

Afin d'isoler individuellement les éléments accumulateurs 12 les uns par rapport aux autres, une bande isolante (non représentée) est prévue sur les différents éléments accumulateurs 12. Pour maintenir fixement les éléments accumulateurs 12 les uns par rapport aux autres, des colliers 84 de serrage sont prévus autour de l'empilage d'éléments accumulateurs 12. Deux bandes 86 de mousse sont également collées sur la portion de bande isolante recouvrant la face supérieure de l'élément accumulateur 12 supérieur de l'empilement.

Comme indiqué précédemment, les entretoises 22 conductrices d'une part, et les attaches 40, 42 ainsi que la plaque 48 d'autre part sont respectivement reliées, par les câbles électriques 31 et 47, au connecteur 35 afin de réaliser des mesures de tension au niveau de la carte de circuit imprimé branchée sur ledit connecteur.

La tension totale aux bornes de l'ensemble 10 accumulateur est obtenue via le branchement des câbles électriques 47 sur les attaches 40, 42 conductrices respectivement en contact de l'électrode positive 18 de l'élément accumulateur supérieur et de l'électrode négative 20 de l'élément accumulateur inférieur de l'empilement. La carte de circuit imprimé mesure également la tension de chaque élément accumulateur 12 via les câbles électriques 31 connectés à l'ensemble des entretoises 22 conductrices et les câbles 47 branchés sur les attaches 40, 42 et la plaque 48. La carte de circuit imprimé permet de réaliser une surveillance des tensions de tous les éléments accumulateurs 12 de façon à s'assurer du bon fonctionnement de l'ensemble 10.

Lors d'une phase de charge de l'ensemble 10, la carte de circuit imprimé peut détecter lorsque la charge est terminée à partir des tensions mesurées. La charge est considérée comme terminée lorsque la tension totale aux bornes de l'ensemble 10 ou la tension d'un des éléments accumulateurs 12 a atteint la tension maximale souhaitée. Ensuite, la carte de circuit imprimé commande un équilibrage des tensions des éléments accumulateurs 12 par prélèvement d'un courant de décharge au niveau des éléments accumulateurs 12 les plus chargés, via les câbles électriques 31 et/ou 41 qui sont connectés électriquement aux éléments accumulateurs concernés par l'intermédiaire des entretoises 22 et/ou des attaches 42 et/ou de la plaque 42. En fin de cycle de charge, la carte de circuit imprimé commande une égalisation des tensions des éléments accumulateurs 12.

Les fusibles 37 de protection prévus sur chacun des câbles électriques 31, 47 permettent d'éviter un éventuel court-circuit de l'ensemble 10 si le courant traversant ces câbles est supérieur à un seuil prédéterminé à partir duquel le fusible se déclenche. On peut éviter ainsi un début d'incendie au sein de l'ensemble 10.

Par ailleurs, dans certaines conditions de roulage du véhicule, les vibrations auxquelles est soumis l'ensemble 10 accumulateur peuvent être relativement importantes. Si la liaison mécanique entre un ou plusieurs câbles électriques 31, 47 et le connecteur 35 a été mal réalisée lors de l'assemblage, l'extrémité de ce ou de ces câbles électriques peut se désolidariser du connecteur et venir par exemple contre un des éléments accumulateurs 12 ou contre le boîtier de réception à l'intérieur duquel est monté l'ensemble accumulateur. Les fusibles 37 de protection permettent également dans ce cas d'éviter un éventuel court-circuit au sein de l'ensemble accumulateur.

Dans l'exemple de réalisation illustré, l'électrode 20 négative de l'élément accumulateur 12 supérieur vient directement en contact avec l'électrode 18 positive de l'élément accumulateur inférieur adjacent. Pour les autres électrodes 18, 20 de connexion axialement superposées, une entretoise conductrice ou isolante est interposée entre deux électrodes immédiatement successives. Il pourrait toutefois être possible, sans sortir du cadre de la présente invention, de prévoir un contact axial direct entre d'autres électrodes négative et positive axialement superposées de deux éléments accumulateurs successifs en montant dans ce cas une entretoise 22 conductrice contre la face supérieure de l'électrode positive de manière à pouvoir réaliser une mesure de tension, et en interposant une entretoise 24 isolante entre l'entretoise conductrice et l'électrode négative de l'élément accumulateur 12 adjacent supérieur aux deux éléments accumulateurs considérés pour conserver la connexion électrique souhaitée des éléments accumulateurs 12.

## Revendications

1. Ensemble accumulateur comprenant une pluralité d'éléments accumulateurs (12) d'énergie électrique superposés selon un axe d'empilage et comprenant chacun des électrodes (18, 20) de connexion, **caractérisé en ce qu'**il comprend au moins une entretoise (22) électriquement conductrice disposée axialement entre les électrodes de connexion de deux éléments accumulateurs adjacents et reliée électriquement à au moins un desdits éléments, et au moins une fiche de connexion (33) montée à l'intérieur d'un évidement (30) de l'entretoise conductrice et reliée à un câble électrique (31) pour une mesure de tension.

2. Ensemble selon la revendication 1, comprenant un moyen de protection (37) contre un court-circuit relié électriquement à la fiche de connexion (33).

3. Ensemble selon la revendication 2, dans lequel le moyen de protection (37) est monté sur le câble électrique (31) associé.

4. Ensemble selon les revendications 2 ou 3, dans lequel le moyen de protection (37) comprend un fusible.

5. Ensemble selon l'une quelconque des revendications précédentes, dans lequel l'entretoise (22) conductrice comprend une base (26) contre laquelle vient en appui au moins une électrode de connexion des deux éléments accumulateurs axialement adjacents, et un talon (28) s'étendant en saillie par rapport à ladite base et sur lequel est ménagé l'évidement (30).

6. Ensemble selon la revendication 5, dans lequel l'évidement (30) s'étend transversalement par rapport à l'axe d'empilage des éléments accumulateurs en étant parallèle à une face avant (26a) de la base (26).

7. Ensemble selon l'une quelconque des revendications précédentes, dans lequel la fiche de connexion (33) est élastiquement déformable.

8. Ensemble selon l'une quelconque des revendications précédentes, comprenant un connecteur (35) sur lequel est fixée l'extrémité du câble électrique (31) relié à la fiche de connexion.

9. Ensemble selon l'une quelconque des revendications précédentes, comprenant une pluralité d'entretoises (22) électriquement conductrices disposées axialement entre au moins certaines des électrodes de connexion des éléments accumulateurs, et une pluralité de fiches de connexion (33) montées chacune à l'intérieur de l'évidement (30) de l'entretoise conductrice associée et reliées chacune à un câble électrique (31) propre.

10. Ensemble selon la revendication 9, dans lequel chaque câble électrique comprend un moyen de protection (37) contre un court-circuit.

11. Ensemble selon l'une quelconque des revendications précédentes, dans lequel les éléments accumulateurs (12) d'énergie électrique sont montés de manière à disposer alternativement les électrodes positives (18) et négatives (20) de connexion le long de l'axe d'empilage de sorte qu'une électrode positive d'un élément accumulateur soit axialement adjacente d'une électrode négative d'un élément accumulateur adjacent, des entretoises (24) isolantes et les entretoises (22) conductrices étant agencées pour connecter en série la pluralité d'éléments accumulateurs.

## Patentansprüche

1. Akkumulatoranordnung, welche mehrere Speicherelemente (12) für Elektroenergie, die entlang einer Stapelachse übereinander angeordnet sind und jeweils Verbindungselektroden (18, 20) aufweisen, aufweist, **dadurch gekennzeichnet, dass** sie mindestens ein elektrisch leitendes Distanzstück (22), das axial zwischen den Verbindungselektroden zweier benachbarter Speicherelemente angeordnet und elektrisch mit mindestens einem dieser Elemente verbunden ist, und mindestens einen Verbindungsstecker (33), der im Inneren einer Vertiefung (30) des leitenden Distanzstücks angebracht und mit einem Stromkabel (31) für eine Spannungsmessung verbunden ist, aufweist.

2. Anordnung nach Anspruch 1, welche ein Schutzmittel (37) zum Schutz vor einem Kurzschluss aufweist, das elektrisch mit dem Verbindungsstecker (33) verbunden ist.

3. Anordnung nach Anspruch 2, wobei das Schutzmittel (37) an dem zugehörigen Stromkabel (31) angebracht ist.

4. Anordnung nach Anspruch 2 oder 3, wobei das Schutzmittel (37) eine Schmelzsicherung aufweist.

5. Anordnung nach einem der vorhergehenden Ansprüche, wobei das leitende Distanzstück (22) einen Basisteil (26), an dem mindestens eine Verbindungselektrode der zwei axial benachbarten Speicherelemente zur Anlage kommt, und einen Absatz (28), der sich in Bezug auf den Basisteil vorspringend erstreckt und an dem die Vertiefung (30) ausgebildet ist, aufweist.

6. Anordnung nach Anspruch 5, wobei sich die Vertiefung (30) quer bezüglich der Stapelachse der Speicherelemente erstreckt und dabei parallel zu einer Vorderfläche (26a) des Basisteils (26) ist.

7. Anordnung nach einem der vorhergehenden Ansprüche, wobei der Verbindungsstecker (33) elastisch verformbar ist.

8. Anordnung nach einem der vorhergehenden Ansprüche, welche einen Verbinder (35) aufweist, an dem das Ende des Stromkabels (31) befestigt ist, das mit dem Verbindungsstecker verbunden ist.

9. Anordnung nach einem der vorhergehenden Ansprüche, welche elektrisch leitende Distanzstücke (22), die axial zwischen mindestens einigen der Verbindungselektroden der Speicherelemente angeordnet sind, und mehrere Verbindungsstecker (33), die jeweils im Inneren der Vertiefung (30) des zugeordneten leitenden Distanzstücks angebracht und jeweils mit einem eigenen Stromkabel (31) verbunden sind, aufweist.

10. Anordnung nach Anspruch 9, wobei jedes Stromkabel ein Schutzmittel (37) zum Schutz vor einem Kurzschluss aufweist.

11. Anordnung nach einem der vorhergehenden Ansprüche, wobei die Speicherelemente (12) für Elektroenergie derart angebracht sind, dass abwechselnd die positiven (18) und negativen (20) Verbindungselektroden entlang der Stapelachse angeordnet sind, so dass eine positive Elektrode eines Speicherelements einer negativen Elektrode eines benachbarten Speicherelements axial benachbart ist, wobei isolierende Distanzstücke (24) und die leitenden Distanzstücke (22) dazu eingerichtet sind, die mehreren Speicherelemente in Reihe zu schalten.

## Claims

1. Accumulator assembly comprising a plurality of electrical energy accumulator elements (12) superposed on a stacking axis and each comprising connecting electrodes (18, 20), **characterized in that** it comprises at least one electrically conductive spacer (22) arranged axially between the connecting electrodes of two adjacent accumulator elements and electrically linked to at least one of said elements, and at least one connecting plug (33) mounted inside a void (30) of the conductive spacer and linked to an electric cable (31) for a voltage measurement.

2. Assembly according to Claim 1, comprising a short-circuit protection means (37) electrically linked to the connecting plug (33).

3. Assembly according to Claim 2, in which the protection means (37) is mounted on the associated electric cable (31).

4. Assembly according to Claims 2 or 3, in which the protection means (37) comprises a fuse.

5. Assembly according to any one of the preceding claims, in which the conductive spacer (22) comprises a base (26) against which bears at least one connecting electrode of the two axially adjacent accumulator elements, and a heel (28) extending to protrude relative to said base and on which is formed the void (30).

6. Assembly according to Claim 5, in which the void (30) extends transversely relative to the stacking axis of the accumulator elements by being parallel to a front face (26a) of the base (26).

7. Assembly according to any one of the preceding claims, in which the connecting plug (33) is elastically deformable.

8. Assembly according to any one of the preceding claims, comprising a connector (35) to which is fixed the end of the electric cable (31) linked to the connecting plug.

9. Assembly according to any one of the preceding claims, comprising a plurality of electrically conductive spacers (22) arranged axially between at least some of the connecting electrodes of the accumulator elements, and a plurality of connecting plugs (33) each mounted inside the void (30) of the associated conductive spacer and each linked to a specific electric cable (31).

10. Assembly according to Claim 9, in which each electric cable comprises a short-circuit protection means (37).

11. Assembly according to any one of the preceding claims, in which the electrical energy accumulator elements (12) are mounted in such a way as to alternately arrange the positive (18) and negative (20) connecting electrodes along the stacking axis so that a positive electrode of one accumulator element is axially adjacent to a negative electrode of an adjacent accumulator element, insulating spacers (24) and the conductive spacers (22) being arranged to connect the plurality of accumulator elements in series.
